(19) Europäisches Patentamt
European Patent Office
Office européen des brevets

(11) **EP 3 816 524 B1**

(12) **FASCICULE DE BREVET EUROPEEN**

(45) Date de publication et mention
de la délivrance du brevet:
**20.12.2023 Bulletin 2023/51**

(21) Numéro de dépôt: **20204509.2**

(22) Date de dépôt: **28.10.2020**

(51) Classification Internationale des Brevets (IPC):
**F24D 19/10** *(2006.01)* **F24H 9/20** *(2022.01)*

(52) Classification Coopérative des Brevets (CPC):
**F24H 9/2021; F24D 19/1051;** F24D 2200/02;
Y02B 10/70

(54) **DISPOSITIF DE CHAUFFAGE D'EAU**

VORRICHTUNG ZUR WASSERERHITZUNG

DEVICE FOR HEATING WATER

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **30.10.2019 FR 1912221**

(43) Date de publication de la demande:
**05.05.2021 Bulletin 2021/18**

(73) Titulaire: **Atlantic Industrie**
**85000 La Roche sur Yon (FR)**

(72) Inventeurs:
• **FLEURY, Bernard**
**85000 LA ROCHE SUR YON (FR)**
• **GOURVES, Frédéric**
**85430 AUBIGNY-LES-CLOUZEAUX (FR)**
• **KELLER, William**
**44830 BOUAYE (FR)**

(74) Mandataire: **Plasseraud IP**
**66, rue de la Chaussée d'Antin**
**75440 Paris Cedex 09 (FR)**

(56) Documents cités:
EP-A1- 3 065 021    EP-A1- 3 258 187
EP-A1- 3 404 334    EP-A1- 3 428 858

## Description

### Domaine technique

La présente invention relève du domaine des dispositifs de chauffage d'eau sanitaire.

### Technique antérieure

Il est courant d'utiliser un ballon d'eau chaude pour alimenter un local (par exemple une maison) en eau chaude sanitaire. Le ballon est un réservoir de volume prédéfini avec un port d'entrée d'eau généralement disposé en partie basse du réservoir et un port de soutirage d'eau généralement disposé en partie haute du réservoir. Le ballon contient un ou plusieurs éléments de chauffe permettant de régler la température de l'eau. Le ou les éléments de chauffe peuvent être alimentés en énergie par le réseau électrique conventionnel ou par des énergies vertes, type panneaux photovoltaïques. Une carte de régulation permet d'ajuster la puissance de chauffe du (ou des) éléments chauffants.

Le niveau d'eau ainsi que la température de l'eau dans le ballon peut fluctuer au cours du temps en fonction des consommations de l'habitation et/ou de contraintes extérieures telles que la météo. Ainsi, l'énergie photovoltaïque disponible pour l'habitation peut elle aussi varier en fonction de l'ensoleillement. Il se peut par exemple que dans certains cas, il y ait absence de stockage suite à un ensoleillement alors que les besoins du jour suivant dépasseront la capacité de stockage de ce jour-là. On peut aussi se retrouver dans un cas indésirable où l'eau du ballon est surchauffée par l'énergie photovoltaïque à pertes à cause des déperditions thermiques du ballon car les dépenses en eau chaudes du lendemain sont moindres que l'énergie disponible, alors que cette énergie aurait pu être utilisée pour un autre usage du local ou bien revendue sur le réseau.

Le document EP3065021 montre un système de gestion de l'énergie d'un chauffe-eau dans lequel le chauffe-eau est alternativement chauffé par de l'énergie photovoltaïque ou du réseau en fonction de prévisions météorologiques du lendemain. Dans ce document, la consigne de température si le chauffage provient du réseau est différente de la consigne de température si le chauffage provient de l'énergie renouvelable. Ces consignes de température sont de plus modifiées en fonction de données représentatives d'un niveau de production future d'énergie renouvelable.

Le document EP3404334 montre un système de gestion de l'énergie d'un chauffe-eau relié à un système photovoltaïque à des fins de stockage de l'énergie photovoltaïque. Dans ce système, lorsqu'un surplus d'énergie produit par le système photovoltaïque est disponible, et lorsque de plus la température de l'eau contenue dans le chauffe-eau est inférieure à une valeur de surplus de la consigne de température, une carte de régulation détermine à partir du surplus disponible une puissance de chauffe à commander à l'organe de chauffe afin de stocker au moins une partie du surplus d'énergie sous forme d'eau chaude disponible dans le chauffe-eau. De plus, la carte de régulation commande l'organe de chauffe de chauffer l'eau du chauffe-eau en utilisant le surplus d'énergie photovoltaïque tant que la température de l'eau est inférieure à la valeur de surplus.

### Résumé

La présente invention vient améliorer la situation.

Il est proposé un dispositif de chauffage d'eau destiné à alimenter un local en eau chaude, le dispositif comprenant :

- un chauffe-eau comprenant :
- un organe de chauffe pour chauffer de l'eau contenue dans le chauffe-eau,
- une sonde de température pour mesurer une température de l'eau $Teau$ contenue dans le chauffe-eau; et
- un organe de calcul et de régulation connecté à l'organe de chauffe et à la sonde de température pour réguler l'organe de chauffe en fonction d'une consigne de température, l'organe de calcul et de régulation étant connecté à un système d'énergie renouvelable, par exemple un système photovoltaïque, et à un réseau électrique afin de livrer de l'énergie à l'organe de chauffe, la consigne de température ayant une valeur de base T1, et une valeur de surplus T2 supérieure ou égale à la valeur de base T1, lorsque pour un jour j un surplus d'énergie produit par le système d'énergie renouvelable est disponible l'organe de calcul et de régulation est adaptée à déterminer la consigne de température du jour j de telle sorte que :

   lorsqu'une prédiction de l'énergie $Epvj+1$ produite par le système d'énergie renouvelable le jour suivant j+1 est supérieure à la prédiction des consommations en énergie du local ce jour-là, la consigne de température pour le jour même j est fixée à la valeur de base T1, et
   lorsqu'une prédiction de l'énergie produite par le système d'énergie renouvelable le jour suivant j+1 est inférieure à la prédiction des consommations en énergie ce jour-là, la consigne de température pour le jour même j est fixée à la valeur de surplus T2 de sorte à chauffer l'eau contenue dans le chauffe-eau grâce au surplus d'énergie produit par le système d'énergie renouvelable disponible le jour j.

Les caractéristiques exposées dans les paragraphes suivants peuvent, optionnellement, être mises en oeuvre. Elles peuvent être mises en oeuvre indépendamment les unes des autres ou en combinaison les unes avec les autres :

- prédiction des consommations en énergie du local pour le jour j+1 est égale à une énergie de soutirage Sj+1 prédite pour le jour j+1 additionnée à une énergie de déperdition D(Tj) du chauffe-eau à la température de consigne appliquée le jour j,
- l'énergie de soutirage Sj+1 prédite pour le jour j+1 prend en compte un historique des consommations du local,
- la prédiction de l'énergie Epvj+1 produite par le système d'énergie renouvelable le jour suivant j+1 est calculée en fonction de prévisions météorologiques et/ou de données statistiques relatives au chauffe-eau reçues d'un serveur distant du dispositif,
- dans lequel la valeur de surplus T2 est déterminée comme étant la valeur minimisant la fonction suivante :

$$\left[ S_j + D(T_1) + m * C_p * (T_2 - T_1) + \mathrm{MIN}\!\left( S_{j+1} + D(T_2) + m * C_p * (T_2 - T_1)\, ; E_{PVj+1} \right) \right] * \mathrm{C}_1$$
$$+\left[ S_{j+1} + D(T_2) - m * C_p * (T_2 - T_1) - \mathrm{MIN}\!\left( S_{j+1} + D(T_2) + m * C_p * (T_2 - T_1); E_{PVj+1} \right) \right] * \mathrm{C}_2$$

où m est la masse de l'eau, Sj est l'énergie de soutirage prélevée le jour j du chauffe-eau, Sj+1 est l'énergie de soutirage estimée prélevée le jour j+1 du chauffe-eau, Epvj+1 est l'énergie produite par le système d'énergie renouvelable le jour suivant j+1, D(T1) est l'énergie de déperdition du chauffe-eau à la température de base T1, D(T2) est l'énergie de déperdition du chauffe-eau à la température de surplus T2, Cp est la capacité thermique de l'eau, et C1 et C2 deux coefficients prédéfinis selon un profil d'optimisation,

- dans lequel le coefficient C1 est représentatif d'une efficacité de transformation de l'énergie provenant du système d'énergie renouvelable, et le coefficient C2 est représentatif d'une efficacité de transformation de l'énergie provenant du système électrique conventionnel, par exemple C1 = 1 et C2 = 2.5 ou 2.1,
- le coefficient C1 est représentatif d'un coût de l'énergie provenant du système d'énergie renouvelable, et le coefficient C2 est représentatif d'un coût de l'énergie provenant du système électrique conventionnel, par exemple C1 = 0 et C2 = 0.15,
- le coefficient C1 est représentatif d'un bilan carbone pour une énergie renouvelable et le coefficient C2 est représentatif d'un bilan carbone pour une énergie provenant du système électrique conventionnel, par exemple C1 = 45 ou 11 et C2 = 60,
- l'organe de calcul et de régulation inclut une carte de régulation commandant une puissance de chauffe à l'organe de chauffe en fonction de consignes de température, et
- l'organe de calcul et de régulation inclut de plus un gestionnaire d'énergie connecté d'une part à la carte de régulation et d'autre part au système d'énergie renouvelable et au réseau électrique, le gestionnaire d'énergie étant adapté à déterminer des consignes de températures en fonction des prédictions de l'énergie Epvj+1 produite par le système d'énergie renouvelable et des prédictions des consommations en énergie du local ce jour-là, le gestionnaire d'énergie est adapté à communiquer avec la carte de régulation à intervalles réguliers les consignes de températures, par exemple d'environ 10 minutes.

**Brève description des dessins**

D'autres caractéristiques, détails et avantages apparaîtront à la lecture de la description détaillée ci-après, et à l'analyse des dessins annexés, sur lesquels :
**Fig. 1**

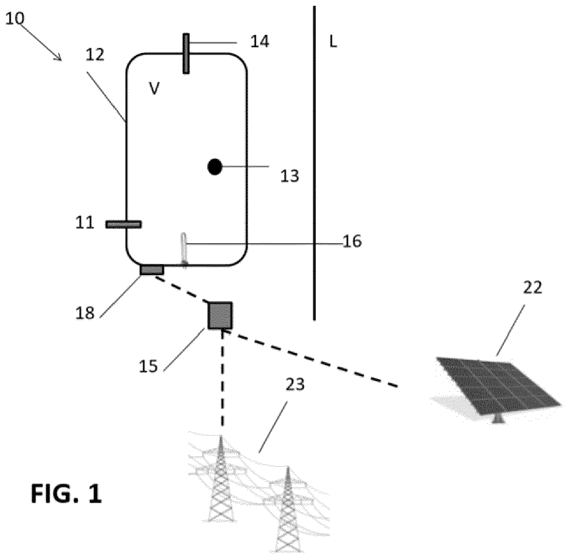

[Fig. 1] montre un dispositif de chauffage d'eau selon un mode de réalisation.

**Description des modes de réalisation**

Les dessins et la description ci-après contiennent, pour l'essentiel, des éléments de caractère certain. Ils pourront donc servir à mieux faire comprendre la présente invention, qui est définie par les revendications.
La figure 1 montre généralement un **dispositif de chauffage d'eau 10** alimentant un local, par exemple une habitation, en eau chaude sanitaire.
Le dispositif de chauffage d'eau 10 inclut un **chauffe-eau 12** destiné à alimenter l'habitation en eau chaude. Le chauffe-eau 12 a une **direction longitudinale L** et un **volume V.** Le volume V du chauffe-eau 12 est de préférence compris entre 100 et 300 litres.

Le chauffe-eau 12 comprend un **port d'approvisionnement en eau 11,** et un **port de soutirage de l'eau 14.** Le port d'approvisionnement 11 sert à remplir le volume V du chauffe-eau en eau sanitaire, et le port de soutirage 14 sert à vider le chauffe-eau pour alimenter le local selon les besoin.

Le chauffe-eau 12 inclut de plus un **organe de chauffe 16** pour chauffer l'eau contenue dans le chauffe-eau 12. Selon un mode de réalisation, l'organe de chauffe est l'unique organe de chauffe du chauffe-eau. L'organe de chauffe 16 pourrait être une ou plusieurs résistances (fixes ou variables) connectées à une ou plusieurs épingles, un serpentin ou condenseur. L'organe de chauffe 16 pourrait être extérieur au volume V. Par exemple, l'organe de chauffe 16 pourrait être une ceinture thermodynamique ou électrique. Le chauffe-eau 12 peut ainsi être un chauffe-eau électrique ou thermodynamique et avoir ainsi des éléments de chauffage thermodynamique et électrique combinés, pompe à chaleur avec vitesse de compresseur variable. L'organe de chauffe 16 peut ainsi comprendre $n$ organes de puissances de chauffe différentes, $n$ étant supérieur ou égal à deux, où la puissance $Pi$ de chaque organe de chauffe $i$ est définie par :

$$Pi = \frac{2^{(i-1)} * Pmax}{2^n - 1}$$

où $Pmax$ est une puissance maximale de chauffe.

Le chauffe-eau 12 comprend de plus une **sonde de température 13** pour mesurer une **température de l'eau** $Teau$ contenue dans le chauffe-eau. Il se pourrait que le chauffe-eau 12 comprenne plusieurs sondes de températures disposées à divers endroits du volume V.

Le chauffe-eau 12 inclut de plus un **organe de calcul et de régulation 19** qui inclut une **carte de régulation 18** connectée à l'organe de chauffe 16 et à la sonde de température 13 pour réguler l'organe de chauffe en fonction d'une consigne de température.

Le dispositif de chauffage d'eau 10 peut comprendre un **système d'énergie renouvelable 22,** dans le cas particulier illustré étant un système photovoltaïque, approvisionnant le dispositif en énergie pour le chauffage de l'eau. Le système photovoltaïque 22 comprend un ou plusieurs panneaux photovoltaïques qui convertissent une lumière reçue en courant continu, et un convertisseur qui convertit le courant continu produit par les panneaux photovoltaïques en courant alternatif. Il est entendu que le convertisseur pourrait être optionnel. Le dispositif de chauffage d'eau 10 est aussi alimenté en énergie par le **réseau électrique conventionnel 23.**

L'organe de calcul et de régulation 19 peut inclure un **gestionnaire d'énergie 15** en communication avec la carte de régulation 18. Le gestionnaire d'énergie 15 permet de réguler l'apport en énergie au chauffe-eau en proportions variables d'énergie provenant du système photovoltaïque 22 et du réseau électrique conventionnel 23. La puissance de chauffe à commander à l'organe de chauffe 16 peut être calculée par la carte de régulation 18 ou déterminée par le gestionnaire d'énergie 15. La carte de régulation 18 en fonction de la puissance de chauffe commande l'organe de chauffe 16.

Selon un mode de réalisation, le gestionnaire d'énergie 15 en coopération avec la carte de régulation 18 permet d'utiliser le chauffe-eau 14 comme moyen de stockage de surplus d'énergie produite par les panneaux photovoltaïques en énergie thermique. En effet, dans certains cas, il se peut que le système photovoltaïque 22 produise plus d'énergie que ce que le local ne requiert. Le dispositif 10 permet qu'au moins une partie de ce surplus d'énergie photovoltaïque produit peut-être réinjectée dans le dispositif de chauffage d'eau 12 au lieu d'être injectée à perte au réseau d'alimentation. Ainsi, l'énergie qui aurait dû être retournée au réseau (donc à perte) est transformée en énergie thermique en chauffant l'eau du chauffe-eau de façon additionnelle à son fonctionnement habituel. Le dispositif de chauffage d'eau 12 fonctionne alors comme un stockage d'énergie, en convertissant de l'énergie électrique produite en surplus par le système photovoltaïque 22 en énergie thermique (eau chauffée). Si le surplus est plus important que la puissance de chauffe possible par le chauffe-eau, la différence pourrait être réinjectée dans le réseau.

Le gestionnaire d'énergie 15 détermine une consigne de température à transmettre à la carte de régulation 18 qui elle commande l'organe de chauffe 16. Cette consigne va dépendre des prédictions d'énergies renouvelables provenant du système photovoltaïque 22 et des habitudes et consignes de consommation du local. La consigne de température a une **valeur de base T1,** et une **valeur de surplus T2** supérieure ou égale à la valeur de base T1 correspondant à un surplus d'énergie photovoltaïque disponible. Selon un mode de réalisation, la valeur de surplus T2 est compris entre la valeur de base T1 et 75°C. Dans un mode de réalisation, la valeur de surplus T2 est déterminée afin de conserver l'intégrité de l'émail de la cuve et limiter la corrosion.

Ainsi, lorsque pour un jour j un surplus d'énergie produit par le système photovoltaïque est disponible la carte de régulation 18 est adaptée à déterminer la consigne de température du jour j de telle sorte que :

- lorsqu'une prédiction de l'énergie Epvj+1 produite par le système photovoltaïque 22 le jour suivant j+1 est supérieure à la prédiction des consommations en énergie du local ce jour-là, la consigne de température pour le jour même j est fixée à la valeur de base T1, et

- lorsqu'une prédiction de l'énergie produite par le système photovoltaïque 22 le jour suivant j+1 est inférieure à la prédiction des consommations en énergie ce jour-là, la consigne de température pour le jour même j est fixée à la valeur de surplus T2 de sorte à chauffer l'eau contenue dans le chauffe-eau 12 grâce au surplus d'énergie produit par le système photovoltaïque disponible le jour j. À défaut, la consigne de température est la valeur de base T1.

La détermination de la production de l'énergie produite par le système photovoltaïque 22 et la prédiction des consommations en énergie du local ce jour-là peut être faite par le gestionnaire d'énergie 15, par la carte de régulation 18 ou bien par les deux. Le gestionnaire d'énergie 15 peut communiquer avec la carte de régulation 18 à intervalles réguliers. Il a été trouvé qu'une communication toutes les 10 min permet d'assurer un optimum entre la réactivité du système, et la fiabilité (nombre de commutations relais).

La prédiction des consommations en énergie du local pour le jour j+1 peut être égale à une énergie de soutirage Sj+1 prédite pour le jour j+1 additionnée à une énergie de déperdition D(Tj) du chauffe-eau 12 à la température de consigne appliquée le jour j. L'énergie de soutirage Sj+1 prédite pour le jour j+1 peut prendre en compte un historique des consommations du local. Elle peut aussi dépendre d'éléments transmis par le client lui-même, comme par exemple une absence programmée. Ainsi, même si un surplus est disponible, le fait que le consommateur ne soit pas présent permettra de revendre le surplus d'énergie photovoltaïque au lieu de surchauffer le chauffe-eau 12 à pertes.

La prédiction de la production de l'énergie produite par le système photovoltaïque 22 peut être faite en prenant en compte des données météorologiques. Ces données peuvent être transmisses en temps réel, à intervalles réguliers, par voie filaire ou sans fil. De ce fait, le gestionnaire d'énergie 15 et/ou la carte de régulation 18 peuvent être adaptés à recevoir des données météorologiques d'un serveur distant par exemple. Le gestionnaire d'énergie 15 et/ou la carte de régulation 18 peuvent être adaptés à recevoir aussi ou en alternative des données basées sur un historique ou des statistiques internes au chauffe-eau.

La valeur de surplus T2 peut être déterminée comme étant la valeur minimisant la fonction suivante :

$$\left[S_j + D(T_1) + m * C_p * (T_2 - T_1) + \text{MIN}\left(S_{j+1} + D(T_2) + m * C_p * (T_2 - T_1) ; E_{PVj+1}\right)\right] * C_1$$

$$+ \left[S_{j+1} + D(T_2) - m * C_p * (T_2 - T_1) - \text{MIN}\left(S_{j+1} + D(T_2) + m * C_p * (T_2 - T_1); E_{PVj+1}\right)\right] * C_2$$

où m est la masse de l'eau, Sj est l'énergie de soutirage prélevée le jour j du chauffe-eau, Sj+1 est l'énergie de soutirage estimée prélevée le jour j+1 du chauffe-eau, Epvj+1 est l'énergie produite par le système photovoltaïque le jour suivant j+1, D(T1) est l'énergie de déperdition du chauffe-eau à la température de base T1, D(T2) est l'énergie de déperdition du chauffe-eau à la température de surplus T2, Cp est la capacité thermique de l'eau, et C1 et C2 deux coefficients prédéfinis selon un profil d'optimisation.

Selon un mode de réalisation, le coefficient C1 est représentatif d'une efficacité de transformation de l'énergie provenant du système photovoltaïque, et le coefficient C2 est représentatif d'une efficacité de transformation de l'énergie provenant du système électrique conventionnel. Le coefficient C1 peut être 1 pour désigner une première efficacité de transformation d'une énergie renouvelable (par exemple photovoltaïque) et le coefficient C2 peut être 2.5 ou de 2.1 pour désigner une deuxième efficacité de transformation moins importante que la première relatif à l'efficacité des moyens de production d'énergie en France et pertes dans les réseaux électriques.

Selon un autre mode de réalisation, le coefficient C1 est représentatif d'un coût de l'énergie provenant du système photovoltaïque, et le coefficient C2 est représentatif d'un coût de l'énergie provenant du système électrique conventionnel. Par exemple, C1 = 0 et C2 = 0.15. Le coefficient C1 correspond au cout moyen du kW/h en euros pour septembre 2019 pour l'énergie photovoltaïque et le coefficient C2 correspond au cout moyen du kW/h en euros pour septembre 2019 pour l'énergie provenant du réseau électrique français.

Selon un autre mode de réalisation, le coefficient C1 est représentatif d'un bilan carbone pour une énergie renouvelable et le coefficient C2 est représentatif d'un bilan carbone pour une énergie provenant du système électrique conventionnel. Par exemple C1 = 45 ou 11 et C2 = 60. Le coefficient C1 correspond par exemple à 45 gCO2eq/kWh dans le cas d'une énergie photovoltaïque ou correspond par exemple à 11 gCO2eq/kWh dans le cas d'une énergie éolienne. Le coefficient C2 correspond par exemple à 60 gCO2eq/kWh dans le cas d'une énergie provenant du réseau électrique français.

**Revendications**

**1. Dispositif (10) de chauffage d'eau** destiné à alimenter un local en eau chaude, le dispositif comprenant :

- un **chauffe-eau (12)** comprenant :
- un **organe de chauffe (24)** pour chauffer de l'eau contenue dans le chauffe-eau,
- une **sonde de température (13)** pour mesurer une **température de l'eau** *Teau* contenue dans le chauffe-eau; et
- un **organe de calcul et de régulation (19)** connecté à l'organe de chauffe et à la sonde de température pour réguler l'organe de chauffe en fonction d'une consigne de température, l'organe de calcul et de régulation étant connecté à un **système d'énergie renouvelable (16),** par exemple un système photovoltaïque, et à un **réseau électrique (17)** afin de livrer de l'énergie à l'organe de chauffe, la consigne de température ayant une **valeur de base T1,** et une **valeur de surplus T2** supérieure ou égale à la valeur de base T1, lorsque pour un jour j un surplus d'énergie produit par le système d'énergie renouvelable est disponible l'organe de calcul et de régulation est adapté à déterminer la consigne de température du jour j de telle sorte que :

lorsqu'une prédiction de l'énergie Epvj+1 produite par le système d'énergie renouvelable le jour suivant j+1 est supérieure à la prédiction des consommations en énergie du local ce jour-là, la consigne de température pour le jour même j est fixée à la valeur de base T1, et
lorsqu'une prédiction de l'énergie produite par le système d'énergie renouvelable le jour suivant j+1 est inférieure à la prédiction des consommations en énergie ce jour-là, la consigne de température pour le jour même j est fixée à la valeur de surplus T2 de sorte à chauffer l'eau contenue dans le chauffe-eau grâce au surplus d'énergie produit par le système d'énergie renouvelable disponible le jour j.

2. Dispositif de chauffage selon la revendication 1, dans lequel la prédiction des consommations en énergie du local pour le jour j+1 est égale à une **énergie de soutirage Sj+1** prédite pour le jour j+1 additionnée à une **énergie de déperdition D(Tj)** du chauffe-eau à la température de consigne appliquée le jour j.

3. Dispositif de chauffage d'eau selon la revendication 2, dans lequel l'énergie de soutirage Sj+1 prédite pour le jour j+1 prend en compte un historique des consommations du local.

4. Dispositif de chauffage d'eau selon l'une des revendication 1 à 3, dans lequel la prédiction de l'énergie Epvj+1 produite par le système d'énergie renouvelable le jour suivant j+1 est calculée en fonction de prévisions météorologiques et/ou de données statistiques relatives au chauffe-eau reçues d'un serveur distant du dispositif.

5. Dispositif de chauffage d'eau selon l'une des revendication 1 à 4, dans lequel la valeur de surplus T2 est déterminée comme étant la valeur minimisant la fonction suivante :

$$\left[S_j + D(T_1) + m * C_p * (T_2 - T_1) + \mathrm{MIN}\left(S_{j+1} + D(T_2) + m * C_p * (T_2 - T_1) \,;\, E_{PVj+1}\right)\right] * \mathrm{C}_1$$

$$+\left[S_{j+1} + D(T_2) - m * C_p * (T_2 - T_1) - \mathrm{MIN}\left(S_{j+1} + D(T_2) + m * C_p * (T_2 - T_1);\, E_{PVj+1}\right)\right] * \mathrm{C}_2$$

où m est la masse de l'eau, Sj est l'énergie de soutirage prélevée le jour j du chauffe-eau, Sj+1 est l'énergie de soutirage estimée prélevée le jour j+1 du chauffe-eau, Epvj+1 est l'énergie produite par le système d'énergie renouvelable le jour suivant j+1, D(T1) est l'énergie de déperdition du chauffe-eau à la température de base T1, D(T2) est l'énergie de déperdition du chauffe-eau à la température de surplus T2, Cp est la capacité thermique de l'eau, et C1 et C2 deux coefficients prédéfinis selon un profil d'optimisation.

6. Dispositif de chauffage d'eau selon la revendication précédente, dans lequel le coefficient C1 est représentatif d'une efficacité de transformation de l'énergie provenant du système d'énergie renouvelable, et le coefficient C2 est représentatif d'une efficacité de transformation de l'énergie provenant du système électrique conventionnel, par exemple C1 = 1 et C2 = 2.5 ou 2.1.

7. Dispositif de chauffage d'eau selon la revendication 5, dans lequel le coefficient C1 est représentatif d'un coût de l'énergie provenant du système d'énergie renouvelable, et le coefficient C2 est représentatif d'un coût de l'énergie provenant du système électrique conventionnel, par exemple C1 = 0 et C2 = 0.15.

8. Dispositif de chauffage d'eau selon la revendication 5, dans lequel le coefficient C1 est représentatif d'un bilan carbone pour une énergie renouvelable et le coefficient C2 est représentatif d'un bilan carbone pour une énergie provenant du système électrique conventionnel, par exemple C1 = 45 ou 11 et C2 = 60.

9. Dispositif de chauffage d'eau selon l'une des revendications précédentes, dans lequel l'organe de calcul et de régulation inclut une **carte de régulation (18)** commandant une puissance de chauffe à l'organe de chauffe en fonction de consignes de température.

10. Dispositif de chauffage d'eau selon la revendication précédente, dans lequel l'organe de calcul et de régulation inclut de plus un **gestionnaire d'énergie (15)** connecté d'une part à la carte de régulation et d'autre part au système d'énergie renouvelable et au réseau électrique, le gestionnaire d'énergie étant adapté à déterminer des consignes de températures en fonction des prédictions de l'énergie Epvj+1 produite par le système d'énergie renouvelable et des prédictions des consommations en énergie du local ce jour-là, le gestionnaire d'énergie est adapté à communiquer avec la carte de régulation à intervalles réguliers les consignes de températures, par exemple d'environ 10 minutes.

**Patentansprüche**

1. Vorrichtung (10) zum Erwärmen von Wasser, die dazu bestimmt ist, einen Raum mit warmem Wasser zu versorgen, wobei die Vorrichtung umfasst:

   - einen Wassererhitzer (12) mit:
   - einem Heizelement (24) zum Erwärmen von Wasser, das im Wassererhitzer enthalten ist,
   - einem Temperatursensor (13) zum Messen einer Temperatur $T_{eau}$ des im Wassererhitzer enthaltenen Wassers; und
   - einem Rechen- und Regelelement (19), das mit dem Heizelement und mit dem Temperatursensor verbunden ist, um das Heizelement gemäß eines Temperatur-Sollwerts zu regeln, wobei das Rechen- und Regelelement mit einem System für erneuerbare Energie (16), z.B. einem Photovoltaiksystem, und mit einem Stromnetz (17) verbunden ist, um dem Heizelement Energie zu liefern, wobei der Temperatur-Sollwert einen Basiswert T1 und einen Überschusswert T2 aufweist, der größer oder gleich dem Basiswert T1 ist, wobei dann, wenn für einen Tag j ein Überschuss an durch das System für erneuerbare Energie erzeugter Energie verfügbar ist, das Rechen- und Regelelement dazu angepasst ist, den Temperatur-Sollwert für den Tag j so zu bestimmen, dass:

     der Temperatur-Sollwert für diesen Tag j auf den Basiswert T1 gesetzt wird, wenn eine Vorhersage für die vom System für erneuerbare Energie am Folgetag j+1 erzeugte Energie Epvj+1 größer ist als die Vorhersage für den Energieverbrauch des Raumes an diesem Tag, und
     der Temperatur-Sollwert für diesen Tag j auf den Überschusswert T2 gesetzt wird, wenn eine Vorhersage für die von dem System für erneuerbare Energie am Folgetag j+1 erzeugte Energie niedriger ist als die Vorhersage für den Energieverbrauch an diesem Tag, so dass das in dem Wassererhitzer enthaltene Wasser durch den an Tag j verfügbaren Überschuss an Energie erwärmt wird, der von dem System für erneuerbare Energie erzeugt wird.

2. Vorrichtung zum Erwärmen von Wasser nach Anspruch 1, wobei die Vorhersage des Energieverbrauchs des Raumes für den Tag j+1 gleich einer für den Tag j+1 vorhergesagten Entnahmeenergie Sj+1 ist, die zu einer Verlustenergie D(Tj) des Wassererhitzers bei dem an Tag j angewandten Temperatur-Sollwert addiert wird.

3. Vorrichtung zum Erwärmen von Wasser nach Anspruch 2, wobei die für den Tag j+1 vorhergesagte Entnahmeenergie Sj+1 eine Verbrauchshistorie des Raumes berücksichtigt.

4. Vorrichtung zum Erwärmen von Wasser nach einem der Ansprüche 1 bis 3, wobei die Vorhersage der am Folgetag j+1 vom System für erneuerbare Energie erzeugten Energie Epvj+1 auf der Grundlage von meteorologischen Vorhersagen und/oder von statistischen Daten über den Wassererhitzer berechnet wird, die von einem von der Vorrichtung entfernten Server empfangen werden.

5. Vorrichtung zum Erwärmen von Wasser nach einem der Ansprüche 1 bis 4, wobei der Überschusswert T2 als der Minimalwert der folgenden Funktion bestimmt wird:

$$\left[S_j + D(T_1) + m * C_p * (T_2 - T_1) + \text{MIN}\left(S_{j+1} + D(T_2) + m * C_p * (T_2 - T_1) ; E_{PVj+1}\right)\right] * C_1$$

$$+\left[S_{j+1} + D(T_2) - m * C_p * (T_2 - T_1) - \text{MIN}\left(S_{j+1} + D(T_2) + m * C_p * (T_2 - T_1); E_{PVj+1}\right)\right] * C_2$$

wobei m die Masse des Wassers ist, Sj die am Tag j aus dem Wassererhitzer entnommene Entnahmeenergie ist, Sj+1 die geschätzte am Tag j+1 aus dem Wassererhitzer entnommene Entnahmeenergie ist, Epvj+1 die vom System für erneuerbare Energie am Folgetag j+1 erzeugte Energie ist, D(T1) die Verlustenergie des Wassererhitzers bei der Basistemperatur T1 ist, D(T2) die Verlustenergie des Wassererhitzers bei der Überschuss-Temperatur T2 ist, Cp die Wärmekapazität von Wasser ist und C1 und C2 zwei gemäß eines Optimierungsprofils vordefinierte Koeffizienten sind.

6. Vorrichtung zum Erwärmen von Wasser nach dem vorhergehenden Anspruch, wobei der Koeffizient C1 für einen Wirkungsgrad der Umwandlung von Energie aus dem System für erneuerbare Energie steht und der Koeffizient C2 für einen Wirkungsgrad der Umwandlung von Energie aus dem konventionellen elektrischen System steht, beispielsweise C1 = 1 und C2 = 2,5 oder 2,1.

7. Vorrichtung zum Erwärmen von Wasser nach Anspruch 5, wobei der Koeffizient C1 für die Kosten der Energie aus dem System für erneuerbare Energie steht und der Koeffizient C2 für die Kosten der Energie aus dem konventionellen elektrischen System steht, beispielsweise C1 = 0 und C2 = 0,15.

8. Vorrichtung zum Erwärmen von Wasser nach Anspruch 5, wobei der Koeffizient C1 für eine Kohlenstoffbilanz für eine erneuerbare Energie steht und der Koeffizient C2 für eine Kohlenstoffbilanz für eine Energie aus dem konventionellen elektrischen System steht, beispielsweise C1 = 45 oder 11 und C2 = 60.

9. Vorrichtung zum Erwärmen von Wasser nach einem der vorhergehenden Ansprüche, wobei das Rechen- und Regelelement eine Regelkarte (18) enthält, die dem Heizelement in Abhängigkeit von Temperatur-Sollwerten eine Heizleistung befiehlt.

10. Vorrichtung zum Erwärmen von Wasser nach dem vorhergehenden Anspruch, wobei das Rechen- und Regelelement zusätzlich einen Energiemanager (15) beinhaltet, der einerseits mit der Regelkarte und andererseits mit dem System für erneuerbare Energie und dem Stromnetz verbunden ist, wobei der Energiemanager geeignet ist, Temperatur-Sollwerte in Abhängigkeit von den Vorhersagen der vom System für erneuerbare Energie erzeugten Energie Epvj+1 und den Vorhersagen des Energieverbrauchs des Raumes an diesem Tag zu bestimmen, und der Energiemanager geeignet ist, mit der Regelkarte in regelmäßigen Abständen die Temperatur-Sollwerte zu kommunizieren, beispielsweise etwa 10 Minuten.

**Claims**

1. A device (10) for heating water intended to supply a room with hot water, the device comprising:

   - a water heater (12) comprising:
   - a heating member (24) for heating water contained in the water heater,
   - a temperature probe (13) for measuring the temperature of the water contained in the water heater; and
   - a calculation and regulation member (19) connected to the heating member and to the temperature probe to regulate the heating member according to a temperature setpoint, the calculation and regulation member being connected to a renewable energy system (16), for example a photovoltaic system, and to an electrical network (17) in order to deliver energy to the heating member, the temperature setpoint having a base value T1, and a surplus value T2 greater than or equal to the base value T1, when for a day j a surplus of energy produced by the renewable energy system is available the calculation and regulation member is adapted to determine the temperature setpoint for day j such that:

      when a prediction of the energy Epvj+1 produced by the renewable energy system on the following day j+1 is greater than the prediction of the energy consumption of the room on that day, the temperature setpoint for the same day j is fixed at the base value T1, and
      when a prediction of the energy produced by the renewable energy system on the following day j+1 is lower than the prediction of energy consumption on that day, the temperature setpoint for the same day j is set at the value of surplus T2 so as to heat the water contained in the water heater thanks to the surplus energy produced by the renewable energy system available on day j.

2. The heating device according to claim 1, wherein the prediction of energy consumption of the room for day j+1 is equal to a withdrawal energy Sj+1 predicted for day j+1 added to a loss energy D(Tj) of the water heater at the setpoint temperature applied on day j.

3. The device for heating water according to claim 2, wherein the withdrawal energy Sj+1 predicted for day j+1 takes into account a history of consumption of the room.

4. The device for heating water according to one of claims 1 to 3, wherein the prediction of the energy Epvj+1 produced by the renewable energy system on the following day j+1 is calculated based on weather forecasts and/or statistical data relating to the water heater received from a server remote from the device.

5. The device for heating water according to one of claims 1 to 4, wherein the surplus value T2 is determined as being the value minimising the following function:

$$\left[S_j + D(T_1) + m * C_p * (T_2 - T_1) + \text{MIN}\left(S_{j+1} + D(T_2) + m * C_p * (T_2 - T_1) ; E_{PVj+1}\right)\right] * C_1$$

$$+\left[S_{j+1} + D(T_2) - m * C_p * (T_2 - T_1) - \text{MIN}\left(S_{j+1} + D(T_2) + m * C_p * (T_2 - T_1); E_{PVj+1}\right)\right] * C_2$$

where m is the mass of the water, Sj is the withdrawal energy taken on day j from the water heater, Sj+1 is the estimated withdrawal energy taken on day j+1 from the water heater, Epvj+1 is the energy produced by the renewable energy system on the following day j+1, D(T1) is the loss energy of the water heater at the base temperature T1, D(T2) is the loss energy of the water heater at the surplus temperature T2, Cp is the thermal capacity of the water, and C1 and C2 two predefined coefficients according to an optimisation profile.

6. The device for heating water according to the preceding claim, wherein the coefficient C1 is representative of a transformation efficiency of the energy coming from the renewable energy system, and the coefficient C2 is representative of a transformation efficiency of energy from the conventional electrical system, for example C1 = 1 and C2 = 2.5 or 2.1.

7. The device for heating water according to claim 5, wherein the coefficient C1 is representative of a cost of energy coming from the renewable energy system, and the coefficient C2 is representative of a cost of energy coming from the conventional electrical system, for example C1 = 0 and C2 = 0.15.

8. The device for heating water according to claim 5, wherein the coefficient C1 is representative of a carbon balance for renewable energy and the coefficient C2 is representative of a carbon balance for energy coming from the conventional electrical system, for example C1 = 45 or 11 and C2 = 60.

9. The device for heating water according to one of the preceding claims, wherein the calculation and regulation member includes a regulation card (18) controlling a heating power at the heating member according to temperature setpoints.

10. The device for heating water according to the preceding claim, wherein the calculation and regulation member further includes an energy manager (15) connected on the one hand to the regulation card and on the other hand to the renewable energy system and the electrical network, the energy manager being adapted to determine temperature setpoints based on predictions of the energy Epvj+1 produced by the renewable energy system and predictions of energy consumption of the room that day, the energy manager is adapted to communicate with the regulation card at regular intervals the temperature instructions, for example approximately 10 minutes.

FIG. 1

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 3065021 A

- EP 3404334 A